# EUROPÄISCHE PATENTANMELDUNG

(11) **EP 1 742 173 A2**
(43) Veröffentlichungstag der Anmeldung: **10.01.2007**
(21) Anmeldenummer: 05027932.2
(22) Anmeldetag: 20.12.2005
(51) Int. Cl.: G06K 19/077

(54) **Karte und Herstellungsverfahren**

(30) Priorität: 21.06.2005 EP 05013309
(71) Anmelder: VisionCard PersonalisierungsgmbH, 6175 Kematen/Tirol (AT)
(72) Erfinder: Wolny, Robert, 6063 Rum (AT)
(74) Vertreter: Ostermann, Thomas

(57) **Zusammenfassung**

Die Erfindung betrifft eine Karte für kontaktlose Daten- und/oder Energieübertragung mit externen Geräten enthaltend einen mehrschichtigen Kartenkörper, der eine Trägerschicht (6) aufweist zur Aufnahme einer Antennenspule mit an einer Oberseite (19) der Trägerschicht freiliegenden Spulenanschlüssen (17), die elektrisch leitend mit Anschlüssen eines einen Chip (8) enthaltenden Chipmoduls (9) verbunden sind, wobei der Chip in einer Ausnehmung (13') der Trägerschicht (6) eingefasst ist, wobei die Windungen (16) der Antennenspule auf der Oberseite (19) der Trägerschicht (6) verlaufen und dass eine Ausgleichsschicht (3) auf der Oberseite (19) der Trägerschicht (6) verläuft, wobei die Ausgleichsschicht (3) zum einen eine Chipmodulöffnung (13) zur Anlage des Chipmoduls (9) an die Trägerschicht (6) und zum anderen eine Brückenöffnung (20) zur Kontaktierung von Anschlüssen (21) einer sich quer zu den Windungen (16) erstreckenden Antennenbrücke (22) aufweist.

## Beschreibung

Die Erfindung betrifft eine Karte für kontaktlose Daten- und/oder Energieübertragung mit externen Geräten enthaltend einen mehrschichtigen Kartenkörper, der eine Trägerschicht aufweist zur Aufnahme einer Antennenspule mit an einer Oberseite der Trägerschicht freiliegenden Spulenanschlüssen, die elektrisch leitend mit Anschlüssen eines einen Chip enthaltenden Chipmoduls verbunden sind, wobei der Chip in einer Ausnehmung der Trägerschicht eingefasst ist.

Ferner betrifft die Erfindung ein Verfahren zur Herstellung einer Karte für kontaktlose Daten- und/oder Energieübertragung mit externen Geräten, wobei ein einen Chip tragendes Chipmodul mit einer eine Antennenspule aufweisenden Trägerschicht verbunden wird und wobei Anschlüsse des Chipmoduls mit Spulenanschlüssen der Antennenspule elektrisch leitend verbunden werden.

Aus der DE 100 32 676 A1 ist es bekannt, zur Herstellung einer Karte für kontaktlose Daten- und/oder Energieübertragung mit externen Geräten ein mit einem Chip bestücktes Leadframe als Chipmodul mit einer eine Antennenspule aufweisenden Trägerschicht vorläufig zu fixieren. Die Antennenspule ist innerhalb der Trägerschicht eingefasst, wobei Spulenanschlüsse zur elektrischen Verbindung mit Anschlüssen des Chips freigelegt sind. Zur Verbindung des Chipmoduls mit der Trägerschicht weist das Chipmodul abragende Ösen auf, die unter Kontaktierung benachbarter Anschlüsse des Chipmoduls an den Spulenanschlüssen in die Trägerschicht einschneiden. In der Kontaktierstellung liegt das Leadframe flächig auf einer Fläche der Trägerschicht an, wobei die Windungen der in der Trägerschicht eingefassten Spule beabstandet zu der Oberfläche des Leadframes angeordnet sind. Nachteilig hieran ist, dass die Windungen der Antenne in der Trägerschicht versenkt angeordnet sein müssen. Dadurch, dass die Ösen des Chipmoduls in die Trägerschicht eingedrückt werden müssen, ist die Herstellung der Karte relativ aufwändig.

Aufgabe der vorliegenden Erfindung ist es, eine Karte, ein Halbzeug bzw. ein Verfahren zur Herstellung einer Karte derart anzugeben, dass eine prozesssichere und einfache Herstellung einer mit einem Chipmodul und einer Antennenspule versehenen kontaktlos zu betreibenden Karte ermöglicht wird.

Zur Lösung dieser Aufgabe ist die erfindungsgemäße Karte in Verbindung mit dem Oberbegriff des Patentanspruchs 1 dadurch gekennzeichnet, dass die Windungen der Antennenspule auf der Oberseite der Trägerschicht verlaufen und dass eine Ausgleichsschicht auf der Oberseite der Trägerschicht verläuft, wobei die Ausgleichsschicht zum einen eine Chipmodulöffnung zur Anlage des Chipmoduls an die Trägerschicht und zum anderen eine Brückenöffnung zur Kontaktierung von Anschlüssen einer sich quer zu den Windungen erstreckenden Antennenbrücke aufweist.

Der besondere Vorteil der erfindungsgemäßen Karte besteht darin, dass auf einfache Weise die Verwendung eines mit einem Chip versehenen Chipmoduls mit einer auf einer Trägerschicht aufgebrachten Antennenspule ermöglicht wird. Die erfindungsgemäße Ausgleichsschicht verhindert ein unerwünschtes Reißen der an der Oberseite der Trägerschicht angeordneten Windungen und Kontakte der Antennenspule sowie das Entstehen von Kurzschlüssen beim Aufbringen einer Antennenbrücke auf die Oberseite der Trägerschicht.

Die Ausgleichsschicht dient zum einen als Höhenausgleich des Chipmoduls bei einem nachfolgenden Laminierprozess mit weiteren Kartenschichten. Zum anderen dient die Ausgleichsschicht als elektrische Isolierung der Antennenbrücke zu den Windungen der Trägerspule, da sich die Ausgleichsschicht auch in einem Bereich zwischen den Windungen und der Antennenbrücke erstreckt.

Nach einer Weiterbildung der Erfindung ist die Ausgleichsschicht in einem solchen Bereich angeordnet, dass ein mechanischer sowie elektrischer Schutz der Windungen der Antennenspule vor der vorzugsweise durch Drucken aufgebrachten Antennenbrücke gewährleistet ist. Vorzugsweise hängt die Dicke der Ausgleichsschicht von der Dicke eines den Chip tragenden Chipträgers des Chipmoduls ab, so dass das Chipmodul bzw. die Antennenbrücke bündig zu der Ausgleichsschicht abschließen und somit die Weiterverarbeitung der Schichten zur Karte vereinfacht wird.

Zur Lösung der Aufgabe ist das erfindungsgemäße Verfahren in Verbindung mit dem Oberbegriff des Patentanspruchs 6
dadurch gekennzeichnet, dass auf einer dem Chipmodul zugewandten Oberseite der Trägerschicht eine Ausgleichsschicht auflaminiert wird, die zum einen eine Chipmodulöffnung in Größe des Moduls zur Anlage des Chipmoduls an die Trägerschicht und zum anderen die zwei Öffnungen für die Verbindung durch die Brücke aufweist, dass die Antennenbrücke auf die Ausgleichsschicht durch Siebdrucken aufgebracht wird, dass das Chipmodul mittels eines nicht leitenden Klebers in der Chipmodulöffnung positioniert wird und dass in einem weiteren Schritt durch Laminieren der Trägerschicht mit einer flächig an derselben anliegenden unteren Deckschicht und Laminieren der Ausgleichsschicht mit einer flächig an derselben anliegenden oberen Deckschicht die Anschlüsse des Chipmoduls mit den Antennenanschlüssen elektrisch leitend kontaktiert werden.

Der besondere Vorteil des erfindungsgemäßen Verfahrens besteht darin, dass auf einfache Weise eine prozesssichere Herstellung einer Karte ermöglicht wird, ohne dass eine umfängliche Bearbeitung von einzelnen Schichten erforderlich ist. Eine zusätzliche Ausgleichsschicht ermöglicht einen langzeitstabilen Betrieb einer kontaktlosen Karte. Eine feste und innige Verbindung der Kartenschichten sowie eine direkte Haftung der Anschlüsse des Chipmoduls an den Antennenanschlüssen unter elektrischer Kontaktierung wird durch Laminieren ermöglicht, wobei die Windungen der Antennenspule vor mechanischer Beanspruchung durch das Chipmodul selbst geschützt sind.

Nach einer Weiterbildung der Erfindung kann die Antennenspule durch Siebdrucken auf einer Seite der Trägerschicht aufgebracht werden, ohne dass die Windungen der Antennenspule im Betrieb der Karte durch Verwendung eines Chipmoduls (Leadframes) Schaden nehmen. Die Trägerschicht erfordert eine zusätzliche Bearbeitung, bevor sie mit den weiteren Kartenschichten laminiert wird. Die Trägerschicht wird mit einer Ausstanzung versehen zur Aufnahme des Chips. Die Ausgleichsfolie wird mit einer Ausstanzung in Größe des Chipträgers des Chipmoduls und der Anschlüsse der Antennenbrücke versehen.

Auf einfache Weise werden die Spulenanschlüsse der Trägerschicht mittels Druckkontakt durch Laminieren mit den Anschlüssen des Chipmoduls elektrisch und mechanisch verbunden. Hierdurch ist eine besonders einfache elektrische Kontaktierung gegeben.

Weitere Vorteile der Erfindung ergeben sich aus den weiteren Unteransprüchen.

Ein Ausführungsbeispiel der Erfindung wird nachfolgend anhand der Zeichnungen näher erläutert.

### Es zeigen:

- Figur 1: eine Draufsicht auf eine Kernschicht der Karte,
- Figur 2: einen Querschnitt durch die Kernschicht im Bereich der Schnittlinie III-III in Figur 1 und
- Figur 3: einen Querschnitt durch die Kernschicht entlang der Schnittlinie III-III in Figur 1 in eine Explosionsdarstellung.

Eine erfindungsgemäße Karte für kontaktlose Daten- und/oder Energieübertragung mit externen Geräten weist einen mehrschichtigen Kartenkörper auf, der im Wesentlichen aus einem Prelaminat 1 als Halbzeug und mindestens einer sich am Prelaminat 1 anschließenden bedruckten Schicht (PVC-Schicht) mit oder ohne einer weiteren transparenten oder thermobeschreibbaren Overlayschicht besteht.

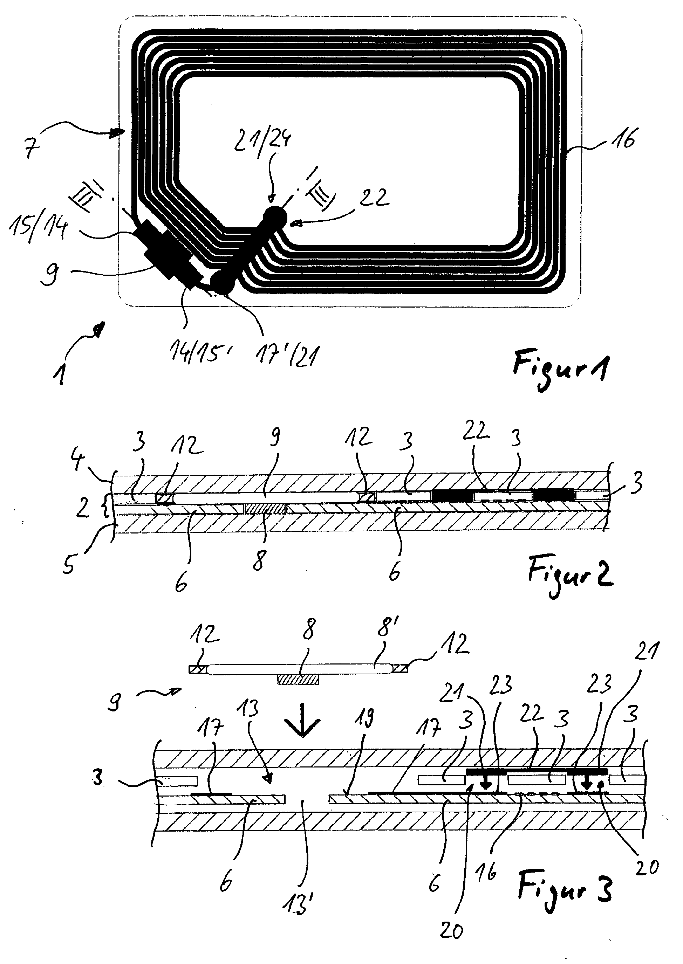

In den Figuren 1 bis 3 ist ein Prelaminat 1 dargestellt, das im Wesentlichen aus einer Kernschicht 2, einer oberen Deckschicht 4 und einer unteren Deckschicht 5 besteht.

Die Kernschicht 2 besteht zum einen aus einer Trägerschicht 6, auf der eine Antennenspule 7 aufgebracht ist. Die Antennenspule 7 ist vorzugsweise durch Siebdrucken auf die Trägerschicht 6 aufgebracht.

Zum anderen weist die Kernschicht 2 ein Chipmodul 9 sowie eine Ausgleichsschicht 3 auf, die sich im Wesentlichen in einer gemeinsamen Ebene unter Anlage an einer Oberseite 19 der Trägerschicht 6 erstrecken. Das Chipmodul 9 weist zum einen einen Chip 8 und zum anderen einen Chipträger 8' auf. Der Chip 8 ist vorzugsweise in einem mittleren Bereich des Chipmoduls 9 erhaben zu dem Chipträger 8' angeordnet. Das Chipmodul 9 ist vorzugsweise als ein Leadframe ausgebildet, wobei der Chipträger 8' Anschlüsse 12 aufweist zur elektrischen Kontaktierung des Chipmoduls 9 mit Spulenanschlüsse 17, 17' der Antennenspule 7.

Die Ausgleichsschicht 3 weist zum einen eine Chipmodulöffnung 13 auf, so dass das Chipmodul 9 direkt auf die Trägerschicht 6 aufgesetzt werden kann. Das Chipmodul 9 ist in einer Ausnehmung 13' der Trägerschicht 6 unter flächiger Anlage des Chipträgers 8' an der Oberseite 19 der Trägerschicht 6 eingefasst. Vorzugsweise wird die Ausnehmung 13' durch Ausstanzen der Trägerschicht 6 hergestellt.

Die Anschlüsse 12 des Leadframes 9 sind im Bereich von stirnseitigen Enden 14 des lang gestreckten und mit den korrespondierenden Anschlüssen des Chips 8 verbundenen Metalllappen 15, 15' aufweisenden Leadframes 9 angeordnet. Die Metalllappen 15, 15' erstrecken sich quer zu Windungen 16 der Antennenspule 7, wobei die endseitigen Anschlüsse 12 der Metalllappen 15, 15' zu den Spulenanschlüssen 17 korrespondieren. Die Spulenanschlüsse 17, 17' sind mit den Leadframeanschlüssen 12 durch Beaufschlagen von Wärme und Druck direkt verbunden.

Auf der Antennenseite (Oberseite 19) der Trägerschicht 6 erstreckt sich die gestanzte Ausgleichsschicht 3 vollflächig und bettet das Leadframe 9 ein. Sie dient zum Schutz des Leadframes 9 und des Chips 8 und zur Vermeidung des Einreißens der Windungen 16 durch die Metalllappen 15, 15' des Leadframes 9 während einer Biegebeanspruchung der Karte sowie als Isolation zwischen einer Antennenbrücke 22 und den Windungen 16 der Trägerschicht 6.

Zur elektrischen Verbindung eines Spulenanschlusses 17' mit einem gegenüberliegenden Ende 24 der Windungen 16 ist eine Antennenbrücke 22 vorgesehen, die quer zu den Windungen 16 angeordnet ist. Die Antennenbrücke 22 ist wie die Windungen 16 aus einem elektrisch leitenden Material hergestellt, wobei ein erster Anschluss 21 der Antennenbrücke 22 in einer ersten Brückenöffnung 20 der Ausgleichsschicht 3 mit einem ersten Verbindungsanschluss 23 der Antennenspule 7 und ein zweiter Anschluss 21 der Antennenbrücke 22 in einer weiteren Brückenöffnung 20 der Ausgleichsschicht 3 mit einem zweiten Verbindungsanschluss 23 der Antennenspule 7 elektrisch in Verbindung steht. Die Antennenbrücke 22 ist durch Aufdrucken auf die bereits mit der Trägerschicht 6 verbundenen Ausgleichsschicht 3 hergestellt.

Die Ausgleichsschicht 3 ist von der Dicke des Chipträgers 8' abhängig. Vorzugsweise ist die Dicke der Ausgleichsschicht 3 größer als oder gleich der Dicke des Chipträgers 8'. Im vorliegenden Ausführungsbeispiel weist das Prelaminat 1 eine Dicke von 550 µm auf. Die obere Deckfolie 4, die untere Deckfolie 5 sowie die Kernschicht 2 weisen jeweils eine Dicke von 150 µm, die Ausgleichsschicht 3 eine Dicke von 100 µm auf.

Die Herstellung des Prelaminats 1 erfolgt folgendermaßen. In einem ersten Schritt wird die Antennenspule 7 auf die Trägerschicht 6 durch Siebdrucken aufgebracht. In einem zweiten Schritt wird durch Ausstanzen die Ausnehmung 13' der Trägerschicht 6 zur Aufnahme des Chips 8 hergestellt. In einem weiteren Schritt, der auch vor dem vorhergehenden Schritt vorgenommen werden kann, wird die Ausgleichsschicht 3 gestanzt, an die Trägerschicht 6 angeheftet und mit derselben laminiert. Die Ausgleichsschicht 3 weist bereits die gestanzte Chipmodulöffnung 13 sowie die gestanzte Brückenöffnung 20 auf. Die Brückenöffnungen 20 korrespondieren zu Verbindungsanschlüssen 23 der Antennenspule 7, damit durch späteres Aufbringen der Antennenbrücke 22 eine elektrische Verbindung von einem Spulenanschluss 17, 17' der Antennenspule 7 zu einem gegenüberliegenden Ende 24 der Windungen 16 gewährleistet ist.

In einem weiteren Schritt wird die Antennenbrücke 22 durch Siebdrucken auf die Ausgleichsschicht 3 aufgebracht, wobei Anschlüsse 21 der Antennenbrücke 22 zu den Verbindungsanschlüssen 23 der Antennenspule 7 korrespondieren.

In einem weiteren Schritt, der auch vor dem vorhergehenden Schritt vorgenommen werden kann, wird ein Kleber zur Fixierung des Chipmoduls 9 durch Siebdrucken in einem zwischen den Spulenanschlüssen 17, 17' liegenden Bereich der Trägerschicht 6 aufgebracht.

In einem nachfolgenden Schritt wir das Chipmodul 9 unter Einbettung des Chips 8 in die Ausnehmung 13' der Trägerschicht 6 auf der Trägerschicht 6 positioniert. Hierbei entsteht eine haftende Verbindung zwischen dem Chipmodul 9 und der Trägerschicht 6.

In einem weiteren Schritt wird die obere Deckschicht 4 auf die Ausgleichsschicht 3 und die untere Deckschicht 5 an eine Unterseite der Trägerschicht 6 flächig angeheftet. Durch Aufbringen von Wärme und Druck (Laminieren) werden die Deckschichten 4, 5 mit der aus der Trägerschicht 6, der Ausgleichsschicht 3 und dem Chipmodul 9 gebildeten Kernschicht 2 verbunden, wobei erst durch diesen Laminierschritt eine innige und feste Kontaktierung der Anschlüsse 12 des Chipmoduls 9 mit den Spulenanschlüssen 17 gegeben ist.

Vorzugsweise wird das Prelaminat 1 in einem Bogen hergestellt, der beispielsweise mehrere Nutzen 1 umfasst. Zur Erstellung von Karten werden die Bögen zu beiden Seiten mit einer bedruckten PVC-Folie versehen, auf die gegebenenfalls eine transparente oder thermobeschreibbare Oberflächenfolie aufgelegt und mit dem Prelaminat 1 zusammengeheftet werden. Nach Laminieren der zusammengehefteten Schichten der Bögen können dann die Karten entsprechend der vorgegebenen Dimension aus dem Bogen ausgestanzt werden.

## Patentansprüche

1. Karte für kontaktlose Daten- und/oder Energieübertragung mit externen Geräten enthaltend einen mehrschichtigen Kartenkörper, der eine Trägerschicht (6) aufweist zur Aufnahme einer Antennenspule (7) mit an einer Oberseite (19) der Trägerschicht (6) freiliegenden Spulenanschlüssen (17), die elektrisch leitend mit Anschlüssen (12) eines einen Chip (8) enthaltenden Chipmoduls (9) verbunden sind, wobei der Chip (8) in einer Ausnehmung (13') der Trägerschicht (6) eingefasst ist, **dadurch gekennzeichnet, dass** die Windungen (16) der Antennenspule (7) auf der Oberseite (19) der Trägerschicht (6) verlaufen und dass eine Ausgleichsschicht (3) auf der dem Chipmodul (9) zugewandten Oberseite (19) der Trägerschicht (6) verläuft, wobei die Ausgleichsschicht (3) zum einen eine Chipmodulöffnung (13) zur Anlage des Chipmoduls (9) an die Trägerschicht (6) und zum anderen eine Brückenöffnung (20) zur Kontaktierung von Anschlüssen (21) einer sich quer zu den Windungen (16) erstreckenden Antennenbrücke (22) aufweist.

2. Karte nach Anspruch 1, **dadurch gekennzeichnet, dass** die Dicke der Ausgleichsschicht (3) von der Dicke eines den Chip (8) tragenden Chipträgers (8') des Chipmoduls (9) abhängt und dass die Ausgleichsschicht (3) durch Laminieren mit der Trägerschicht (6) verbunden ist, und dass die Ausgleichsschicht (3) in einem Bereich zwischen der Antennenbrücke (22) und der Trägerschicht (6) verläuft.

3. Karte nach Anspruch 1 oder 2, **dadurch gekennzeichnet, dass** die Antennenspule (7) auf der Trägerschicht (6) aufgedruckt ist.

4. Karte nach einem der Ansprüche 1 bis 3, **dadurch gekennzeichnet, dass** das Chipmodul (9) ausschließlich durch Laminieren auf der Trägerschicht (6) gehalten ist, wobei die Anschlüssen (12) des Chipmoduls (9) direkt mit den Spulenanschlüssen (17) der Antennenspule (7) elektrisch leitend verbunden sind.

5. Halbzeug für eine Karte nach einem der Ansprüche 1 bis 4, **gekennzeichnet durch** eine Kernschicht (2), die eine Trägerschicht (6) für die Antennenspule (7), ein einen Chip (8) und einen Chipträger (8') aufweisendes Chipmodul (9) und eine sich in der Ebene des Chipträgers (8') erstreckende und auf die Trägerschicht (6) auflaminierte Ausgleichsschicht (3) aufweist, wobei die Ausgleichsschicht (3) zum einen eine Chipmodulöffnung (13) zur Anlage des Chipmoduls (9) an die Trägerschicht (6) und zum anderen eine Brückenöffnung (20) zur Kontaktierung von Anschlüssen (21) einer sich quer zu den Windungen (16) erstreckenden Antennenbrücke (22) aufweist, und dass die Kernschicht (2) flächig mit einer an einer Unterseite der Trägerschicht (6) angeordneten unteren Deckschicht (5) und mit einer an einer Oberseite der Ausgleichsschicht (3) angeordneten oberen Deckschicht (4) **durch** Laminieren verbunden ist.

6. Verfahren zur Herstellung einer Karte für kontaktlose Daten- und/oder Energieübertragung mit externen Geräten, wobei ein einen Chip (8) tragendes Chipmodul (9) mit einer eine Antennenspule (7) aufweisenden Trägerschicht (6) verbunden wird und wobei Anschlüsse (12) des Chipmoduls (9) mit Spulenanschlüssen (17) der Antennenspule (7) elektrisch leitend verbunden werden, **dadurch gekennzeichnet, dass** auf einer dem Chipmodul (9) zugewandten Oberseite (19) der Trägerschicht (6) eine Ausgleichsschicht (3) auflaminiert wird, die zum einen eine Chipmodulöffnung (13) zur Anlage des Chipmoduls (9) an die Trägerschicht (6) und zum anderen eine Brückenöffnung (20) zur Kontaktierung von Anschlüssen (21) einer sich quer zu den Windungen (16) erstreckenden Antennenbrücke (22) aufweist, dass die Antennenbrücke (22) auf die Ausgleichsschicht (3) durch Siebdrucken aufgebracht wird, dass das Chipmodul (9) mittels eines nicht leitenden Klebers die Spulenanschlüsse (17) in der Chipmodulöffnung (13) positioniert wird und dass in einem weiteren Schritt durch Laminieren der Trägerschicht (6) mit einer flächig an derselben anliegenden unteren Deckschicht (5) und der Ausgleichsschicht (3) mit einer flächig an derselben anliegenden oberen Deckschicht (4) die Anschlüsse (12) des Chipmoduls (9) mit den Antennenanschlüssen (17) elektrisch leitend kontaktiert werden.

7. Verfahren nach Anspruch 6, **dadurch gekennzeichnet, dass** die Antennenspule (7) durch Siebdrucken auf einer Oberseite (19) der Trägerschicht (6) aufgebracht wird und dass eine Aussparung (13) in einem für den Chip (8) vorgesehenen Bereich der Trägerschicht (6) ausgestanzt wird zur Aufnahme des Chips (8).

8. Verfahren nach Anspruch 6 oder 7, **dadurch gekennzeichnet, dass** die Chipmodulöffnung (13) und die Brückenöffnung (20) der Ausgleichsschicht (3) vor dem Anheften der Ausgleichsschicht (3) auf die Trägerschicht (6) ausgestanzt werden.

9. Verfahren nach einem der Ansprüche 6 bis 8, **dadurch gekennzeichnet, dass** in einem ersten Schritt durch Laminieren einer aus der Trägerschicht (6), dem Chipmodul (9) und der Ausgleichsschicht (3) gebildeten Kernschicht (2) mit zu beiden Seiten aufgelegten Deckschichten (4, 5) ein Halbzeug hergestellt wird, dass in einem zweiten Schritt durch Laminieren mit weiteren beidseitig des Halbzeugs angelegten Kartenschichten ein Kartenkörper hergestellt wird.

10. Verfahren nach einem der Ansprüche 6 bis 9, **dadurch gekennzeichnet, dass** das Halbzeug und/oder die Karte in Kartennutzen hergestellt werden.
